# EUROPEAN PATENT APPLICATION

(11) **EP 4 664 212 A1**
(43) Date of publication of application: **17.12.2025**
(21) Application number: 24182353.3
(22) Date of filing: 14.06.2024
(51) Int. Cl.: G05B 19/042, G06F 8/656

(54) **MANAGING INTRODUCTION OF UPDATES IN A PROCESS CONTROL FUNCTION**

(71) Applicant: ABB SCHWEIZ AG, 5400 Baden (CH)
(72) Inventor: JOHANSSON, Bjarne, 722 22 Västerås (SE); HOLMGREN, Olof, 722 31 Västerås (SE); SÄLLBERG, Stefan, 212 30 Malmö (SE)
(74) Representative: Kransell & Wennborg KB

(57) **Abstract**

A method for managing introduction of updates in a process control function in a network centric process control system (10), where a first version of the process control function is being run in a controller node (12) and has a number of original states and a second version of the process control function is provided in the process control system (10), a first part of which is provided in a process control function handling node (14), the second version having a number of new states corresponding to the original states. The method comprises testing the second version, comprising comparing new states of the second version with corresponding original states of the first version and switching over to using the second version, after finding has been made based on the comparison of the states of the first and second versions of the process control function, that the second version is satisfactory.

## Description

### TECHNICAL FIELD

The present disclosure relates to a network centric process control system, a testing and switchover control module in the network centric process control system as well as to a method, a computer programs and a computer program product for managing introduction of updates in a process control function used to control an industrial process.

### BACKGROUND

Process control systems are used to control industrial processes and for this reason a process control system may comprise a process control function for the control.

Redundancy is an important aspect of process control systems in order to avoid unnecessary disruption in case of failures. In this case two identical process control functions may be running in parallel, where one is active and the other is in standby, i.e. only the outputs of the active process control function are used in the control. A switchover from the active to the standby process control function is then made if there is a fault in the active process control function. Redundancy in a network centric process control system is for instance described in EP 3702857.

Another important aspect of a process control system is the continued improvement of the process control functions, which is typically done through introducing new versions. When updating a process control function, it may be of interest to compare a new version with actual runs of an old version. This is for instance disclosed in US 2023/0101026, where a first existing application on a first controller and an updated application on a test device are executed in parallel, where both receive the same input data and their output data is being compared with each other.

However, there is room for improvement in the way that testing of a new version of a process control function and replacing of an old version of the process control function with the new version is made in a network centric process control system.

### SUMMARY

One objective is to improve the way that process control function updates are being made in a network centric process control system.

According to a first aspect there is presented a method for managing introduction of updates in a process control function used to control an industrial process in a network centric process control system, where a first version of the process control function is being run in a controller node of the process control system and has an original input state, an original output state and a number of original intermediate states, which original states are encountered in a cycle of the process control function and where a second version of the process control function is provided in the process control system, at least a first part of which is provided in a process control function handling node of the process control system, the second version of the process control function having a new input state, a new output state and a number of new intermediate states corresponding to the original states of the first version of the process control function, the method comprising:
testing the second version of the process control function in relation to a run of the first version of the process control function, which testing comprises comparing new states of the second version of the process control function with corresponding original states of the run of the first version of the process control function; and
switching over to using the second version of the process control function in the control of the industrial process instead of the first version of the process control function, after the second version of the process control function has been found to be satisfactory,
which finding has been made based on the comparison of the states of the first and second versions of the process control function.

The method may at least partly be performed in a testing and switchover control module of the network centric process control system.

According to a second aspect there is provided a testing and switchover control module in a network centric process control system also comprising a controller node and a process control function handling node, where a first version of the process control function is being run that has an original input state, an original output state and a number of original intermediate states is being run in the controller node, which original states are encountered in a cycle of the process control function and a second version of the process control function is provided in the process control system, at least a first part of which is provided in the process control function handling node, the second version of the process control function having a new input state, a new output state and a number of new intermediate states corresponding to the original states of the first version of the process control function,
the testing and switchover control module comprising a processor and a computer program comprising computer instructions that, when executed by the processor:
tests the second version of the process control function in relation to a run of the first version of the process control function, which testing comprises comparing new states of the second version of the process control function with corresponding original states of the run of the first version of the process control function; and
switches over to using the second version of the process control function in the control of the industrial process instead of the first version of the process control function, after the second version of the process control function has been found to be satisfactory, which finding has been made based on the comparison of the states of the first and second versions of the process control function.

The testing and switchover control module may be realized as a testing and switchover control node comprising a processor and a computer program comprising computer instructions that, when executed by the processor, causes the testing and switchover control node to switch over to using the second version of the process control function in the control of the industrial process instead of the first version of the process control function.

According to a third aspect there is presented network centric process control system for managing introduction of updates in a process control function used to control an industrial process, the network centric process control system comprising a controller node, a process control function handling node and a testing and switchover control module according to the second aspect.

A first part of the second version of the process control function may be provided in the process control function handling node and a second part of the second version of the process control function may be provided in another node of the process control system than the process control function handling node, such as in the controller node.

According to a fourth aspect there is presented a computer program for managing the introducing of updates in a process control function used to control an industrial process in a network centric process control system that comprises a controller node and a process control function handling node, where a first version of the process control function that has an original input state, an original output state and a number of original intermediate states, which original states are encountered in a cycle of the process control function, is being run in the controller node, and a second version of the process control function is provided in the process control system, at least a first part of which is provided in the process control function handling node, the second version of the process control function having a new input state, a new output state and a number of new intermediate states corresponding to the original states of the first version of the process control function, the computer program comprising computer program code, which when run by a processor implementing a testing and switchover control module, causes the testing and switchover control module to:
test the second version of the process control function in relation to a run of the first version of the process control function, which testing comprises comparing new states of the second version of the process control function with corresponding states of the run of the first version of the process control function; and
switch over to using the second version of the process control function in the control of the industrial process instead of the first version of the process control function, after the second version of the process control function has been found to be satisfactory, which finding has been made based on the comparison of the states of the first and second versions of the process control function.

According to a fifth aspect there is presented a computer program product for managing the introducing of updates in a process control function used to control an industrial process in a network centric process control system, the computer program product comprising one or more non-transitory computer storage devices with the computer program code according to the fourth aspect.

In one variation of the first aspect the method may further comprise determining that the second version of the process control function is satisfactory based on the comparison of the states of the first and second versions of the process control function.

In corresponding variation of the second and third aspects, the testing and switchover control module is further caused to determine that the second version of the process control function is satisfactory based on the comparison of the states of the first and second versions of the process control function.

Alternatively, the determination may be made by a user based on a presenting of the results of one or more of the comparisons.

In another variation of the first aspect, the method may further comprise running the first version of the process control function in the controller node and providing the at least a first part of the second version of the process control function in the testing node.

In a corresponding variation of the third aspect, the controller node comprises a processor and a computer program comprising computer instructions that, when executed by the processor, causes the controller node to run the first version of the process control function and the process control function handling node comprises a processor and a computer program comprising computer instructions that, when executed by the processor, causes the process control function handling node to provide the second version of the at least a first part of the process control function.

In yet another variation of the first aspect, the method may further comprise providing the second part of the second version of the process control function on another node than the second node, such as the controller node.

In a corresponding variation of the third aspect, the controller node may be further caused to provide the second part of the second version of the process control function.

A sixth aspect is directed towards a set of computer programs for managing the introducing of process control function updates in the process control function, where a computer program used to cause the process control function handling node to provide the second version of the at least a first part of the process control function in the process control function handling node is a first computer program in the set, the computer program used to realize the testing and switchover control module is a second computer program in the set and a computer program used to provide the second part of the second version of the process control function in the controller node is a third computer program in the set.

The original input state may comprise at least one input signal to the process control function from a field device and the original output state may comprise at least one output signal from the process control function used to control the industrial process with a field device. An intermediate state may in turn comprise one or more values of one or more variables of the process control function at a point in time in the cycle of the process control function.

The first part of the process control function may comprise a first number of subfunctions and the second part may comprise a second number of subfunctions.

The switching over to using the second version of the process control function in the control of the industrial process instead of the first version of the process control function may be made as the industrial process is being controlled in real-time.

The ordering of a switchover to using the second version of the process control function may be triggered by a user of the testing and switchover control module.

According to one variation of the first aspect, the method further comprises moving all of the second version of the process control function that is present in the process control function handling node to the controller node before switching over.

According to a corresponding variation of the third aspect, the process control function handling node is further caused to move all of the second version of the process control function that is present in the process control function handling node to the controller node before switching over.

In case the process control function handling node only comprises the first part of the second version, the moving may involve moving only this first part. If the process control function handling node comprises the complete second version, the moving may involve moving the whole second version.

The using of the second version of the process control function in the control of the industrial process instead of the first version of the process control function may be at least partly made from the process control function handling node.

In case the process control function handling node only comprises the first part of the second version, the control is partly made from the process control function handling node using the first part. In case the process control function handling node comprises the complete second version, the complete second version of the process control function is used from the process control function handling node.

The first part of the second version of the process control function may have a primary input state, a primary output state and a number of primary intermediate states, while the second part of the second version of the process control function may have a secondary input state, a secondary output state and a number of secondary intermediate states.

In case there is a first part of the second version of the process control function in the process control function handling node and a second part of the second version of the process control function in the controller node, the primary input state may correspond to the original input state and the primary output state or the secondary output state may correspond to the original output state.

Alternatively, the secondary input state may correspond to the original input state and the primary output state or the secondary output state may correspond to the original output state.

The at least a first part of the second version of the process control function provided in the process control function handling node may be the complete second version of the process control function, where the primary input state corresponds to the original input state, the primary output state corresponds to the original output state and the primary intermediate states correspond to the original intermediate states.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 schematically illustrates a network centric process control system comprising a controller node, a process control function handling node, a testing and switchover control node and a number of field devices;
Fig. 2 schematically illustrates one realization of a controller node comprising a first control service implementing a first version of a process control function, and a process control function handling service for handling a part of a second version of the process control function;
Fig. 3 schematically illustrates one realization of a process control function handling node comprising a process control function handling service for handling at least a part of the second version of the process control function;
Fig. 4 schematically shows one realization of a testing and switchover control node comprising a testing and switchover control service for testing the second version of the process control system and controlling switchover from the first to the second version of the process control function;
Fig. 5 schematically shows a non-transient computer storage medium comprising a computer program for realizing a testing and switchover control function of the testing and switchover control service;
Fig. 6 schematically shows a number of subfunctions together making up a first and a second part of the process control function;
Fig. 7 is a flow chart illustrating a number of method steps performed in the controller node in a method for managing introduction of updates in a process control function used to control an industrial process in a network centric process control system;
Fig. 8 is a flow chart illustrating a method step performed in the process control function handling node in the method for managing introduction of updates in a process control function used to control the industrial process in the network centric process control system ; and
Fig. 9 is a flow chart illustrating a number of method steps performed in the testing and switchover control node in the method for managing introduction of updates in the process control function used to control an industrial process in the network centric process control system.

### DETAILED DESCRIPTION

Aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

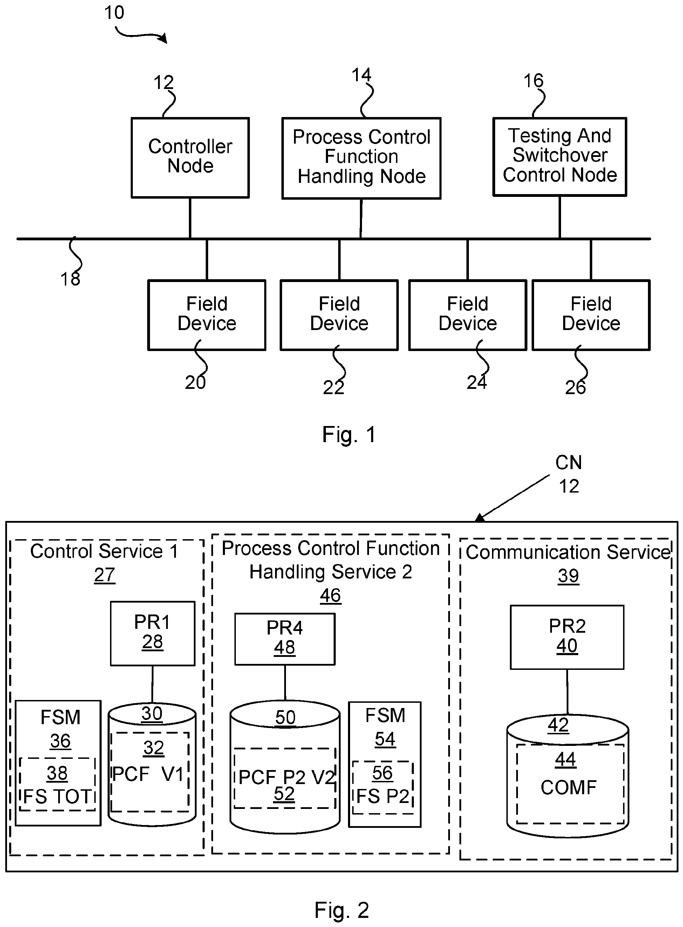

Fig. 1 shows an example of a network centric process control system 10 comprising a controller node 12, a process control function handling node 14 and a testing and switchover control node 16 connected to a network 18. To the network 18 there is also connected a first field device 20, a second field device 22, a third field device 24 and a fourth field device 26. It should here be realized that the number and types of equipment shown in fig. 1 are mere examples and there may be more or fewer. There may additionally be other units in the network centric control system. Although the field devices 20 - 26 are shown as being directly connected to the network 18, they may in many cases be connected to the network 18 via Input Output (IO) modules, IO buses and field buses (not shown).

In the network centric process control system 10, as illustrated in Fig. 1 in a logical topology, IO and devices 20, 22, 24 and 26 are not "owned" or controlled by any controller, as in a controller centric architecture. Controller nodes are focused on execution of process control functions and can access IO signals from any IO module or field device. Controller nodes may more particularly receive input signals originating from the field devices and provide output signals to the field devices. The controller node 12 may thus receive at least one input signal from a field device, such as the first field device 20 either directly or indirectly via an IO module, and determine at least one output signal being output from the controller node 12 for controlling the same or another field device, such as the second field device 22.

More particularly control may be implemented using control services. Control services are typically allocated in different nodes, with one or multiple control services per node.

A control service is thus used to perform control in the process control system, which control involves receiving one or more input signals from one or more of the field devices and sending one or more output signals to one or more of the field devices. In general terms, a control service may have no knowledge about where other devices or nodes that it interacts with are located. This is handled by communication services and is transparent to the control service.

Fig. 2 schematically shows an exemplifying realization of the controller node 12. The controller node 12 may comprise a first control service 27, a communication service 39 and optionally also a process control function handling service 46, where the first control service 27 implements a first version V1 of a process control function PCF.

The different services is each a separate executable running in a separate operating system process provided by a real time operating system of the node. For this reason, the first control service 27 may be implemented through a first processor PR1 28 connected to a program memory 30 comprising the first version V1 of the process control function PCF 32. Optionally, the first control service 27 also comprises a function state memory FSM 36 with all the states FS TOT 38 of the first version V1 of the process control function 32. There is also a communication service 39 implemented through a second processor PR2 40 connected to a program memory 42 comprising a communication function COMF 44. Optionally, there is also a process control handling service 46 implemented through a third processor PR3 48 connected to a program memory 50 comprising a part P2 of the process control function PCT 52, which part P2 is a part of a second version V2 of the process control function PCF 52. The process control handling service 46 may additionally comprise a function state memory FSM 54 comprising function states FS 56 of this part P2 of the second version V2 of the process control function PCF.

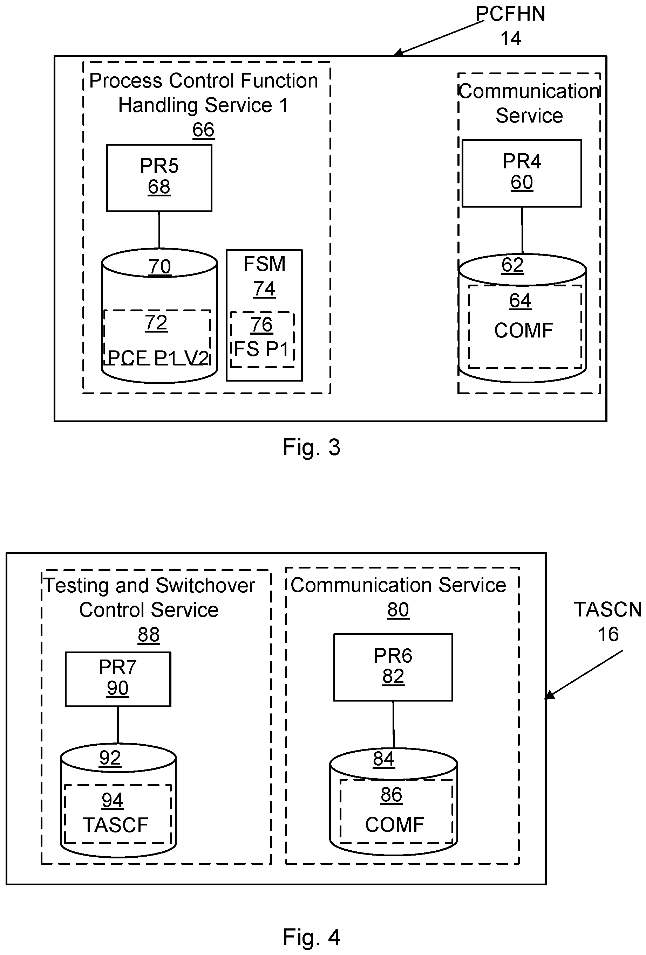

Fig. 3 schematically shows one realization of the process control function handling node 14. It comprises a communication service 58 implemented through a fourth processor PR5 60 connected to a program memory 62 comprising a communication function COMF 64. The process control function handling node 14 also comprises a process control function handling service 66 comprising a fifth processor PR5 68 connected to a program memory 70 comprising at least a part of the second version V2 of the process control function PCT 72. The process control function handling service 66 may additionally comprise a function state memory FSM 74 comprising function states FS 76 of the above-mentioned at least a part of the second version of the process control function.

The at least one part of the second version of the process control function provided in the process control function handling node 14 is at least one first part P1 of the second version of the process control function, while the part of the second version of the process control function that is optionally provided in the controller node 12 is a second part P2. Thereby the process control function handling service in the process control function handling node 14 is a first process control function handling service 46 and the process control function handling service in the controller node 12 is a second process control function handling service 46. A process control function handling service is a service for handling a process control function or a part of the process control function, such as for running the whole or a part of the process control function and sending states of the process control function to entities that have an interest in these states.

Fig. 4 schematically shows one realization of the testing and switchover control node 16. It comprises a communication service 80 implemented through a sixth processor PR6 82 connected to a program memory 84 comprising a communication function COMF 86. The testing and switchover control node 16 also implements a testing and switchover control module. In the present example the testing and switchover control module is implemented through a testing and switchover control service 88, which is implemented through a seventh processor PR7 90 connected to a program memory 92 comprising a testing and switchover control function TASCF 94. The program memory 98 thus comprises computer instructions that, when executed by the seventh processor 90, causes the testing and switch over control node 16 to perform the testing and switchover control function 94.

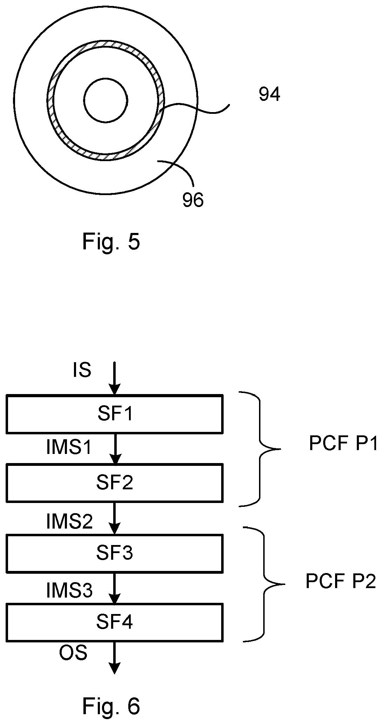

The testing and switchover control function 94 may also be provided on a non-transitory computer storage medium, such as a CD ROM disc, a memory stick or a memory card, where the testing and switchover control function 94 is implemented when being run by the seventh processor 90. Fig. 5 shows one example of such a computer storage medium, in the form of a CD ROM disc 96, carrying software implementing the testing and switchover control function 94.

The above-described communication services may be so-called middleware services.

Aspects of the present disclosure are directed towards a computer program for managing the introducing of updates in the process control function, where the computer program used to realize the testing and switchover control function may be considered to be such a computer program.

Aspects of the present disclosure are directed towards a set of computer programs for managing the introducing of updates in the process control function, where the computer program used to realize the first process control function handling in the process control function handling node may be considered to be a first computer program in the set, the computer program used to realize the testing and switchover control function of the testing and switchover control module may be considered to be a second computer program in the set and the computer program used to realize the second process control function handling in the controller node may optionally be considered to be a third computer program in the set.

Aspects of the present disclosure are also directed towards a computer program product for managing the introducing of updates in the process control function, where the computer program product comprises one or more non-transitory computer storage devices, such as CD ROM discs, memory sticks or memory cards, with the computer program or set of computer programs for managing the introducing of process control function updates in the process control function.

Fig. 6 schematically shows one exemplifying realization of the process control function PCF. The process control function may receive at least one input signal, which is here termed an input state IS, and deliver at least one output signal, here denoted output state OS. It may additionally comprise a number of intermediate states between the input and output states. In the present example it comprises a first intermediate state IMS1, a second intermediate state IMS2 and a third intermediate state IMS3. These intermediate states are thus states in the interior of the process control function PCF. The intermediate states IMS1, IMS2, IMS3 may more particularly be values of variables at different points in time in a cycle of the process control function as it is being run. Also the input state may be considered to be a variable of the process control function. Furthermore, the process control function may comprise a number of subfunctions. As an example, it comprises a first subfunction SF1, a second subfunction SF2, a third subfunction SF3 and a fourth subfunction SF4. In this case the input state IS of the process control function is also an input state of the first subfunction SF1 and the output state OS of the process control function is also an output state of the fourth subfunction SF4. The first intermediate state IMS1 is an output state of the first subfunction SF1 as well as an input state of the second subfunction SF2, the second intermediate state IMS2 is an output state of the second subfunction SF2 as well as an input state of the third subfunction SF3, while the third intermediate state IMS3 is an output state of the third subfunction SF3 and an input state of the fourth subfunction SF4. As an example, the first and second subfunctions SF1, SF2 make up a first number of functions provided in the first part P1 of the process control function PCF, while the third and fourth subfunctions SF3, SF4 make up a second number of subfunctions provided in the second part P2 of the process control function PCF.

Thus, the input state comprises an input signal to the process control function from a field device, such as the first field device 20, and the output state comprises an output signal from the process control function used to control the industrial process with a field device, such as the second field device 22. An intermediate state in turn comprises one or more values of one or more variables of the process control function at a point in time in the cycle of the process control function.

The described realization of the process control function is merely an example. There are a number of variations that are possible. There may for instance be more intermediate states, such as states inside the subfunctions. It is also possible with more subfunctions. Furthermore, the selection of which subfunctions are provided in what parts may differ. It is for instance possible that only the first subfunction SF1 is provided in the first part P1 with the second, third and fourth subfunctions SF2, SF3, SF4 being provided in the second part P2. It is also possible that the first and fourth subfunctions SF1, SF4 are located in the first part P1 with the second and third subfunctions SF2, SF3 in the second part P2. These are just some of a number of different variations. It is also possible that the there are no subfunctions in which case there would be no first and second part. It is also possible that there is no first and second part even though the process control function includes subfunctions. It is additionally possible with more input and output signals.

Software updates are traditionally made on testing devices that are separate from the process control system. A testing then typically involves using the same input signals in an old and new version of a process control function and then comparing the output signals of the new and old versions. After having been tested and found satisfactory the new version of the process control application is then moved to the node of the old version for replacing it.

However, merely comparing the outputs for the same input signals may not be sufficient. It may be necessary to also see to it that the new version operates in the same manner as the original version. i.e. that the new version follows the same path and that variables have the correct values at specific points in time. Moreover, it may also be of interest to immediately use the new version, which may additionally be somewhere else than from the original controller node. It may also be of interest to quickly roll-back from the use of the new version to the use of the old version. It may also be of interest to split the new version and implement it at different locations.

Aspects of the present disclosure address one or more of the above-mentioned issues.

The inventors have realized that some of the redundancy activities used in a network centric process control system can with advantage be used for solving one or more of the above-described issues. Redundancy in a network centric process control system is for instance described in EP 3702857, which is herein incorporated by reference.

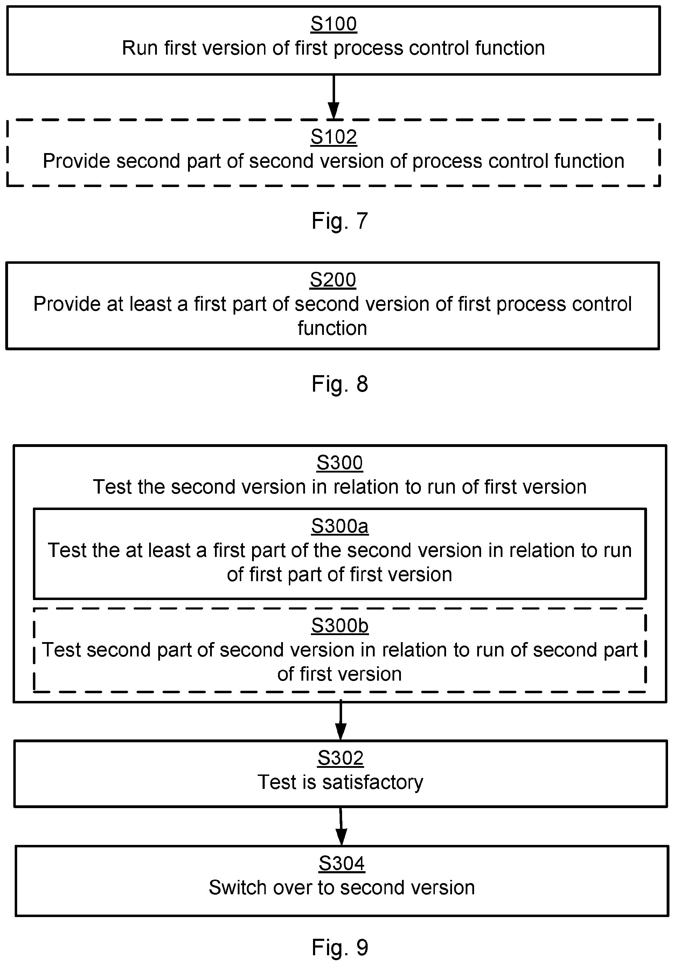

One way of updating a process control function will now be described with reference also being made to fig. 7, 8 and 9, where fig. 7 is a flow chart illustrating a number of method steps performed in the controller node 12, fig. 8 is a flow chart illustrating a number of method steps performed in the process control function handling node 14 and fig. 9 is a flow chart illustrating a number of method steps performed in the testing and switchover control node 16, which steps are steps in a method for managing introduction of updates in a process control function used to control an industrial process in the network centric process control system.

Initially, the first version V1 of the process control function PCF 32 is running in the first control service of the controller node 12, S100, which first version V1 has an original input state IS, an original output state OS and a number of original intermediate states IMS1, IMS2, IMS3 and which original states are encountered or passed in a cycle of the process control function PCF. Thus, the running may involve performing the process control function cyclically, where a cycle may start with receiving an input signal forming or being a part of the original input state IS at a first starting time of the cycle, performing the first subfunction, which results in the generation of an original first intermediate state IMS1 at a second intermediate point in time in the cycle, then performing of the second subfunction SF2 using the original first intermediate state IMS1 as an input and that results in the generation of the original second intermediate state IMS2 at a third intermediate point in time of the cycle. The original second intermediate state IMS2 is then used as an input to the third subfunction SF3, which provides the original third intermediate state IMS3 as an output at a fourth intermediate point time in the cycle. The original third intermediate state IMS3 is then used as an input to the fourth subfunction SF4, which produces an original output state OS as or comprising an output signal from the process control function PCF at a fifth end time of the cycle.

A second version V2 of the process control function is also provided in the process control system 10, which second version V2 has a new input state, a new output state and a number of new intermediate states corresponding to the original states of the first version of the process control function.

The process control function handling node 14 provides at least a part of this second version V2 of the process control function, S200. As an example, the process control function handling node 14 provides the first part P1 of the second version V2 of the process control function PCF 72. It is furthermore possible that this part is provided by the first process control function handling service 66 of the process control function handling node 14.

The first part of the second version of the process control function may have a primary input state, a primary output state and a number of primary intermediate states.

The primary input state may here correspond to the original input state. The primary output state may correspond to an original intermediate state of the first version. In some cases it is possible that the primary output state instead corresponds to the original output state.

A second part of the second version of the process control function may have a secondary input state, a secondary output state and a number of secondary intermediate states where the secondary output state may correspond to the original output state. The secondary input state may correspond to an original intermediate state of the first version.

The at least a first part of the second version of the process control function provided in the process control function handling node may be the complete second version of the process control function, where the primary input state corresponds to the original input state, the primary output state corresponds to the original output state and the primary intermediate states correspond to the original intermediate states.

The second version of the process control function is then tested in relation to a run of the first version of the process control function, S300, which testing is performed by the testing and switchover control service 88 in the testing and switchover control node 16.

For this reason, the second version of the process control function may be run in parallel with the first version. The first and the second version may both receive an input signal from the network 18 that forms the original input state IS of the first version and the new input state of the second version. This may involve the first control service 27 receiving the input signal as an original input state and the first process control function handling service 66 receiving the input signal as a new input state, which new input state may in this case also be the primary input state of the first part P1 of the second version V1. Also the testing and switchover control service 88 of the testing and switchover control node 16 may receive the input signal, which can be from the network or as the original input state from the controller node 12 and the new input state from the process control function handling node 14. The states may be transferred using the communication services of the nodes. The input signal forming the original and new input state may be provided by an IO module or the first field device 20 on the network to subscribers of the input state, where two such subscribers are the communication services of the controller node 12 and the process control function handling node 14. The communication service of the testing and switchover control node 16 is another possible subscriber. Each communication service may then forward the input signal to the corresponding service that is to receive it.

As they are being run the first and second versions also provide the intermediate and output states to the testing and switchover control service 88 of the testing and switchover control node 16.

The first control service may transfer the original intermediate states IMS1, IMS2, IMS3 as well as the original output state OS to the testing and switchover control node 16 using the communication service of the controller node 12 and the testing and switchover control service 88 may then receive the original intermediate states IMS1, IMS2, IMS3 and output state OS via the communication service of the testing and switchover control node 16.

In a similar manner the testing and switchover control service 88 is supplied with the new intermediate states and new output states of the second version of the process control function. This may involve the first process control function handling service 66 providing a primary first intermediate state and a primary second intermediate state as the first and second new intermediate states to the testing and switchover control service 88. The primary second intermediate state may also be supplied to the second part of the second version provided in the second process control function handling service 46. In a similar manner, the second process control function handling service may supply the secondary intermediate state forming the third new intermediate state and the secondary output state to the testing and switchover control service 88.

The testing and switchover control service 88 may then test the at least a first part P1 of the second version V2 of the process control function in relation to a run of the first version V1 of the process control function, S300, which testing comprises comparing new states of the second version V2 of the process control function 52, 72 with corresponding original states of the first version V1 of the first process control function 32. The comparing may thus comprise comparing the input states, output states and the first, second and third intermediate states of the first and second versions of the process control function with each other.

The testing may more particularly involve testing the at least a first part P1 of the second version with the run of a corresponding first part of the first version, S300a, and possibly also the testing of a second part P2 of the second version with the run of a corresponding second part of the first version, S300b.

The testing may involve comparing states from a run of the first part P1 of the second versionV2 that is made in the first process control function handling service 66 in parallel with a corresponding first part of the first version V1 of the process control function being run in real-time. Optionally it may also involve comparing states from a run of the second part P2 of the second version V2 that is made in the second process control function handling service 46 in parallel with a corresponding first part of the first version V1 of the process control function being run in real-time.

Furthermore, a comparing may involve investigating if the states have the same or similar values and occur at the same time or within a time difference threshold in the two cycles of the two versions.

As can be seen above, the run of the first version V1 of the process control function may be a present run, where the sequence is being run in real-time in parallel with the second version of the process control function. Alternatively, the run may be a recorded or historic run, with which the second version is compared. This may involve running the second version in parallel with a replaying of a recorded run of the first version. It is additionally possible that states FS TOT of the first version are stored in the function state memory 36 and that these states and their timings are compared with the states of a recorded or present run of the second version or states FS P1, FS P2 of the second version that are in a similar way stored in the function state memories 54, 74.

As was mentioned above, the testing of the second version may involve using the same input signal and comparing the intermediate states and the output signal or output state. The comparing of the intermediate states may involve seeing that the difference between the same intermediate state of the first and second version is below a corresponding state difference threshold and that the difference in timing is below a corresponding timing difference threshold. The comparing of the output state may involve determining that the output signals are the same or differs with a difference that is below an output signal difference threshold and with a timing difference that is below a corresponding output signal timing difference threshold. The results of the comparisons may then be sent to the testing and switchover control service in the testing and switchover control node, which sending may also here employ the communication services of the nodes.

Thereafter a determination may be made that the testing is satisfactory, S302, i.e. a determination is made that the second version of the process control function is satisfactory and this determination is based on the comparison of the states of the first and second versions of the process control functions. Testing may be determined to be satisfactory if all tests are positive, such as if all or a majority of the differences are below the corresponding thresholds.

The determination may be made by the testing and switchover control service. Alternatively, the determination may be made by a user based on a presenting of the results of one or more of the comparisons. For instance, it is possible that the switchover control service informs the user that the testing as a whole is positive and the user then determines that the testing is satisfactory. It is also possible that the testing and switchover control service presents one or more of the comparisons and results to the user, whereupon the user evaluates the presented comparisons and their results and determines that the testing is satisfactory.

If the testing is determined to be satisfactory, the testing and switchover control service may then order a switchover to using the second version of the process control function in the control of the industrial process instead of the first version of the process control function, S304, which switchover is thus made after the second version of the process control function has been found to be satisfactory and where the finding has been made based on the comparison of the states of the first and second versions of the process control function.

The ordering of a switchover to using the second version of the process control function may be triggered by the user. The user may thus, perhaps after having determined that the testing is satisfactory, instruct the testing and switchover control service to order the switchover.

The switchover may involve ordering the first process control function handling service 66, if it does not already do so, to run the first part P1 of the second version of the process control function in parallel with the first part P1 of the first version V1 of the process control function and ordering the second process control function handling service 46, if it does not already do so, to run the second part P2 of the second version V2 of the process control function in parallel with the corresponding second part P2 of the first version V1 of the process control function. The two runs may thus be parallel. At a set point in time the output signal of the first version is then replaced by the output signal of the second version, which may be done through stopping the supply of the output signal of the first version V1 to the network 18 and instead supplying the output signal of the second version V2 to the network. In the example given above, this may involve ordering the second process control function handling service 46 of the controller node 12 to supply the output signal to the network 18 and to order the first control service 27 to stop supplying the output signal. After a full switchover has been made, it is then possible to stop running the first version of the process control function. In this case, the switching over to using the second version of the process control function in the control of the industrial process instead of the first version of the process control function is made as the industrial process is being controlled in real-time.

It can be seen in the case above that the using of the second version of the process control function in the control of the industrial process instead of the first version of the process control function is at least partly made from the process control function handling node 14. In case the process control function handling node 14 only comprises the first part P1 of the second version V2, the control is partly made from the process control function handling node 14 using the first part P1 and partly form the controller node 12 using the second part P2. In case the process control function handling node 14 comprises the complete second version, the complete second version of the process control function is used in the control from the process control function handling node.

The description above was made in relation to one run of the first and second versions. It should be realized that several runs may be compared before a determination is made that the second version is satisfactory.

It should also be realized that as an alternative to the above described realization, the secondary input state may correspond to the original input state and that the primary output state or the secondary output state may corresponds to the original output state depending on how the functions are divided between the controller and process control function handling nodes.

As can be seen above, it is possible that the process control function handling node 14 provides the complete second version of the process control function. The order to switch over could in this case also be sent to the second process control function handling service and not to the second process control function handling service. In fact, in this case the second process control handling service may be completely omitted from the controller node.

Another alternative is that the part or parts of the second version of the process control function being provided in the process control function handling node, after a successful testing has been made, is being transferred from the process control function handling node 14 to the controller node 12 for replacing the first version in this node. The first process control function handling service 66 may thus move all of the second version of the process control function that is present in the process control function handling node 14 to the controller node 12 before switching over. The first part of the second version or the complete second version may then be sent to the second process control function handling service for being run in parallel with the first version in the first control service 27 before being implemented. Alternatively, the first part of the second version or the complete second version may be sent to the first control service 27 perhaps together with the second part for replacing the first version.

In case the process control function handling node only comprises the first part of the second version, the moving may thus involve moving only this first part. If the process control function handling node comprises the complete second version, the moving may involve moving the whole second version.

Furthermore, as it is possible to compare states from a state memory, it is also possible to omit running the first and second parts of the second version of the process control function.

According to another variation there is no testing and switchover control node. Instead the testing and switchover control module may be implemented in the process control function handling node or in the controller node, for instance as a testing and switchover control service.

According to another variation, the different functions are not realized through different services. It is possible with each node comprising only one processor that runs software implementing the functions of the node that are stored in one or more program memories.

Aspects of the present disclosure may also be described in the following way.

For two (or more) application instances or versions to reach the same state, they need to start from the same state and get the same input. Hence, it may be necessary to store and/or provide current states of a version and perhaps the point in time of the application cycle, such as an input state, an output state and intermediate states. As mentioned earlier. Each application part may be able to find its state data to allow for partial application migration, i.e. for providing different parts of a version of a process control function on different nodes.

The testing and switchover control module compares the state difference between application instances, i.e. process control function versions, and may ensure that only the active application's output state can reach the process. It may blocks/prevent the output state from the evaluated application from reaching the process, which evaluated application in the example above is the second version of the process control function.

The testing and switchover control module may ensure synchronized switches between application versions. Once an engineer or an orchestrator confirms an application version switch, the testing and switchover control module may ensure that it takes place consistently and coherently. The synchronized switch may be made by forcing the application on the different nodes to run a look-step manner before the switch or agreeing on a point in time to switch. Again, do note these are just examples, and other realization alternatives exist. The testing and switchover control module may also ensure that the switch can be made and that prerequisites are fulfilled, such as ensuring the replacement version is ready.

Aspects of the invention allows the following problems to be addressed:

Application migration (partly or whole), i.e. moving a process control function from one node to another.

If it is determined that one application better fits another controller, today, an application cannot be moved to that controller bumpless, i.e. seamlessly. Application migration is likely to become more relevant when transcending into the era of orchestration.

### Fault-tolerance - evaluation impacting the running controller

### Controller "halt" due to application/configuration changes can be avoided.

### Resource limitation

Evaluation can occur on another node than the one executing the live application. By letting the evaluation run on a node different from the controller running the changed application, the controller running the application does not need to execute the changed and unchanged application in parallel. Potential problems in the changes do not affect the controller. By letting the evaluated version of the application execute on a different node, potential problems with that version of the application cannot crash/halt the controller running the unchanged version.

The same mechanism can be utilized to perform an evaluation as an ordinary or extra step during application download. Independent of whether the download is of a changed application or a new, previously not existing application.

The application downloaded may be spun up in a containerized environment on the engineering (or other available) node, where it receives real signal values from the process. It can then run in this context before being downloaded to the controller.

By allowing the evaluated application to execute on a different node, the requirement of available resources on the controller running the changed application is reduced.

### Moving (migrating) applications (whole or parts) - bumpless

Applications can move from one node to another - bumpless.

Either parts or full. Partly migration is achieved by synchronous commit/activation of multiple changed application version.

The move can be combined with an evaluation.

### Application run before download

Run the application on another node before activating it on the controller - using real-process values.

### Debugging/engineering with real-process signal values

It can be done using both live values or by reuse of recorded signal values for dry-running applications with real-process values in the engineering phase.

### Fault-tolerance

A modified application can be started on another node, and if it fails, the old application could remain on standby during a grace period and resume operation if the modified application fails.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for managing introduction of updates in a process control function used to control an industrial process in a network centric process control system (10), where a first version (V1) of the process control function (32) is being run (S100) in a controller node (12) of the process control system (10) and has an original input state (IS), an original output state (OS) and a number of original intermediate states (IMS1, IMS2, IMS3), which original states are encountered in a cycle of the process control function and a second version (V2) of the process control function (52, 72) is provided in the process control system (10), at least a first part (P1) of which (72) is provided (S200) in a process control function handling node (14) of the process control system (10), the second version (V2) of the process control function (52, 72) having a new input state (IS), a new output state (OS) and a number of new intermediate states (IMS1, IMS2, IMS3) corresponding to the original states of the first version (V1) of the process control function (32), the method comprising:
testing (S300) the second version (V2) of the process control function (52, 72) in relation to a run of the first version (V1) of the process control function (32), which testing comprises comparing new states of the second version (V2) of the process control function (52, 72) with corresponding original states of the run of the first version (V1) of the process control function (32); and
switching over (S304) to using the second version (V2) of the process control function (52, 72) in the control of the industrial process instead of the first version (V1) of the process control function (32), after the second version (V2) of the process control function (52, 72) has been found (S302) to be satisfactory, which finding has been made based on the comparison of the states of the first and second versions of the process control function.

2. The method according to claim 1, wherein the original input state (IS) comprises at least one input signal to the process control function from a field device (20) and the original output state (OS) comprises at least one output signal from the process control function used to control the industrial process with a field device (22) and an intermediate state comprises one or more values of one or more variables of the process control function at a point in time in the cycle of the process control function.

3. The method according to claim 1 or 2, wherein the first part (P1) of the process control function comprises a first number of subfunctions (SF1, SF2).

4. The method according to any of claims 1-3, wherein the switching over to using the second version (V2) of the process control function (52, 72) in the control of the industrial process instead of the first version (V1) of the process control function (32) is made as the industrial process is being controlled in real-time.

5. The method according to any of claims 1-4, further comprising moving all (P1) of the second version (V2) of the process control function (72) that is present in the process control function handling node (14) to the controller node (12) before switching over.

6. The method according to any of claims 1-4, wherein the using of the second version (V2) of the process control function (52, 72) in the control of the industrial process instead of the first version (V1) of the process control function (32) is at least partly made from the process control function handling node (14).

7. The method according to any previous claim, wherein a first part (P1) of the second version (V2) of the process control function (72) is provided (S200) in the process control function handling node (14) and a second part (P2) of the second version (V2) of the process control function (52) is provided (S102) in another node of the process control system (10) than the process control function handling node (14).

8. The method according to claim 7, wherein the second part of process control function comprises a second number of subfunctions (SF3, SF4) of the process control function.

9. The method according to claim 7 or 8, wherein the node comprising the second part (P2) of the second version (V2) of the process control function (52) is the controller node (12).

10. The method according to any of claims 1-6, wherein the at least a first part of the second version (V2) of the process control function (72) provided in the process control function handling node (14) comprises the complete second version of the process control function.

11. A testing and switchover control module in a network centric process control system (10) also comprising a controller node (12) and a process control function handling node (14), where a first version (V1) of the process control function (32) that has an original input state (IS), an original output state (OS) and a number of original intermediate states (IMS1, IMS2, IMS3) is being run in the controller node (12), which original states are encountered in a cycle of the process control function, and a second version of the process control function (52, 72) is provided in the process control system (10), at least a first part (P1) of which (72) is provided in the process control function handling node (14), the second version (V2) of the process control function having a new input state (IS), a new output state (OS) and a number of new intermediate states (IMS1, IMS2, IMS3) corresponding to the original states of the first version (V1) of the process control function (32),
the testing and switchover control module comprising a processor (90) and a computer program comprising computer instructions that when executed by the processor (90):
tests the second version (V2) of the process control function (52, 72) in relation to a run of the first version (V1) of the process control function (32), which testing comprises comparing new states of the second version (V2) of the process control function (52, 72) with corresponding original states of the run of the first version (V1) of the process control function (32); and
switches over to using the second version (V2) of the process control function (52, 72) in the control of the industrial process instead of the first version (V1) of the process control function (32), after the second version (V2) of the process control function (52, 72) has been found to be satisfactory, which finding has been made based on the comparison of the states of the first and second versions of the process control function.

12. The testing and switchover control module according to claim 11, wherein the testing and switchover control module is realized as a testing and switchover control node (16) comprising the processor (90) and the computer program with computer instructions that form the testing and switchover control module.

13. A network centric process control system (10) comprising a controller node (12), a process control function handling node (14) and a testing and switchover control module according to claim 12.

14. The network centric process control system (10) according to claim 13, wherein a first part (P1) of the second version (V2) of the process control function (72) is provided in the process control function handling node (14) and a second part (P2) of the second version (V2) of the process control function (52) is provided in the controller node (12).

15. A computer program for managing the introducing of updates in a process control function used to control an industrial process in a network centric process control system (10) that comprises a controller node (12) and a process control function handling node (14), where a first version (V1) of the process control function (32) that has an original input state (IS), an original output state (OS) and a number of original intermediate states (IMS1, IMS2, IMS3) is being run in the controller node (12), which original states are encountered in a cycle of the process control function, and a second version (V2) of the process control function (52, 72) is provided in the process control system (10), at least a first part (P1) of which (72) is provided in the process control function handling node (14), the second version (V2) of the process control function (52, 72) having a new input state (IS), a new output state (OS) and a number of new intermediate states (IMS1, IMS2, IMS3) corresponding to the original states of the first version (V1) of the process control function (PCF), the set of computer programs comprising
the computer program comprising computer program code, which when run by a processor (90) implementing a testing and switchover control module, causes the testing and switchover control module to:
test the second version (V2) of the process control function (52, 72) in relation to a run of the first version (V1) of the process control function (32), which testing comprises comparing new states of the second version (V2) of the process control function (52, 72) with corresponding original states of the run of the first version (V1) of the process control function (32); and
switch over to using the second version (V2) of the process control function (52, 72) in the control of the industrial process instead of the first version (V1) of the process control function (32), after the second version (V2) of the process control function (52, 72) has been found to be satisfactory, which finding has been made based on the comparison of the states of the first and second versions of the process control function.

16. A computer program product for managing the introducing of updates in a process control function used to control an industrial process in a network centric process control system (10), the computer program product comprising one or more non-transitory computer storage devices (96) with the computer program code according to claim 15.
